# EUROPEAN PATENT SPECIFICATION

(11) **EP 2 432 189 B1**
(45) Date of publication and mention of the grant of the patent: **01.03.2017**
(21) Application number: 11181460.4
(22) Date of filing: 15.09.2011
(51) Int. Cl.: H04L 29/06, H04L 29/08

(54) **METHOD AND SYSTEM FOR PROVIDING USERS LOGIN ACCESS TO MULTIPLE DEVICES VIA A COMMUNICATION SYSTEM**
VERFAHREN UND SYSTEM ZUR BEREITSTELLUNG EINES LOGIN-ZUGANGS FÜR BENUTZER ZU MEHREREN VORRICHTUNGEN ÜBER EIN KOMMUNIKATIONSSYSTEM
PROCÉDÉ ET SYSTÈME POUR FOURNIR À DES UTILISATEURS UN ACCÈS DE CONNEXION À PLUSIEURS DISPOSITIFS VIA UN SYSTÈME DE COMMUNICATION

(30) Priority: 17.09.2010 US 885214
(43) Date of publication of application: 21.03.2012
(73) Proprietor: Samsung Electronics Co., Ltd., Suwon-si, Gyeonggi-do, 443-742 (KR)
(72) Inventor: Shelansky, Andrew R., Irvine, CA California 92614 (US); Tran, Dang Van, Laguna Niguel, CA California 92677 (US); Gava, Fabio, 92694 Ladera Ranch (BR)
(74) Representative: Appleyard Lees IP LLP

(56) References cited:
- EP-A1- 1 489 800
- US-A1- 2002 087 625
- US-A1- 2006 256 734

## Description

### RELATED APPLICATION

This application claims priority from U.S. Non-Provisional Patent Application Serial No. 12/885,214 filed on September 17, 2010.

### FIELD OF THE INVENTION

The present invention relates in general to multi-user systems, and in particular to managing multi-user devices.

### BACKGROUND OF THE INVENTION

Conventional multi-user electronic systems involve the use of individual "user accounts", "user profiles", or "logins" (collectively, "logins") for access to electronic devices such as consumer electronics (CE) devices, computing devices, etc. In many of such devices, only a single user can be logged into a device and active at any one time. Multiple users are not effectively able to share any single device between them. US 2002/087625 relates to sharing user profiles between processor-based systems. EP 1 489 800 relates to instant messaging on multi-user computers.

### BRIEF SUMMARY OF THE INVENTION

Embodiments of the invention provide users login access to multiple electronic devices via a communication system. In one embodiment, in response to user login requests, login access is controlled by providing multiple users login access to plural electronic devices capable of communicating via the communication system. Each electronic device allows multiple users to be logged on or logged off the electronic device concurrently. User profiles and activity are shared between the plural electronic devices.

These and other features, aspects and advantages of the present invention will become understood with reference to the following description, appended claims and accompanying figures.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Fig. 1 shows a diagram of a communication system comprising a network for multi-user, multi-device login, according to an embodiment of the invention.
Fig. 2 illustrates an implementation of a multi-user, multi-device system, according to an embodiment of the invention.
Fig. 3A illustrates a multi-user, multi-device login control system, according to an embodiment of the invention.
Fig. 3B illustrates a flowchart of an embodiment of a multi-user, multi-device login process implemented by the login control system of Fig. 3A, according to an embodiment of the invention.
Figs. 4A-4B illustrate example use-cases according to embodiments of the invention wherein multiple users of shared-screen devices log in/out of a multi-user, multi-device system, using one or more conventional remote controls.
Figs. 5A-5B illustrate example use-cases according to embodiments of the invention wherein multiple users of shared-screen devices log in/out of a multi-user, multi-device system, using second-screen devices.
Figs. 6A-6B illustrate example user interface representations for use-cases in a multi-user, multi-device login system wherein multiple users of shared-screen devices and personal second-screen devices log in/out of the system, according to embodiments of the present invention.
Fig. 7 illustrates a scenario wherein multiple users utilize an application when logged into a shared-screen device, while concurrently each of the users is individually also logged into their own personal mobile device, in a multi-user, multi-device login system, according to an embodiment of the invention.
Fig. 8 illustrates a scenario, wherein multiple users are logged into a shared-screen device and also logged into their own respective personal mobile second-screen devices, in a multi-user, multi-device login system, according to an embodiment of the invention.
Fig. 9 is a high level block diagram showing an information processing system comprising a computer system useful for implementing an embodiment of the present invention.

### DESCRIPTION OF THE INVENTION

Embodiments of the present invention provide multi-user, multi-device login method and system for multiple electronic devices. According to an embodiment of the invention, a login control system implements multi-user, multi-device login processes such that each device allows multiple users to be logged on (logged in) or logged off (logged out) that device simultaneously (concurrently). In one embodiment, user profile and activity are shared between the devices in a communication such as a local network of communal devices (e.g., televisions) and personal devices (e.g., handheld electronic devices, tablets, laptop computers, personal computers (PCs)).

A login control system according to an embodiment of the invention accepts simultaneous user logins on a group of devices (e.g., personal or communal devices), allowing user presence (e.g., login/logoff status) and information (e.g., identity) on each device to be shared among a plurality of electronic devices in the network.

In one embodiment of the invention, the devices may include hardware processor, memory, and logic and communication modules. For example, there are a number of large display screen devices (e.g., televisions) that are designed to be used or viewed by multiple users at the same time as communal devices. In many cases, there are multiple such devices in a single area (such as a television in each of several different rooms of a home). Such devices include general-purpose processors, communication mechanisms (e.g., one or more of Ethernet, Bluetooth, and Wi-Fi such as IEEE 802.11 WLAN, etc.), and the ability to host applications. Further, such devices store personalization information, preferences, and other information (collectively, "user profile").

A system according to an embodiment of the invention allows multiple such devices that operate on a communication mechanism (e.g., wireless and/or wired local area network) to share one or more user profiles. Therefore, multiple user profiles can be established and shared between the devices. Multiple users may be concurrently logged on to each device, and users of each device can determine (through, for example, the use of a heads-up display) the current state and location of other users (such as whether they are logged on to a different device, or logged off entirely).

Further, according to embodiments of the invention, the system allows users to log on and log off of the devices by various mechanisms, such as by key-presses on a remote control, through personal devices connected to the communication mechanism (e.g., wireless and/or wired local area network). Such personal devices (e.g., mobile phones, mobile electronic devices) also include display screens, and are termed "second-screen devices" herein. According to embodiments of the invention, the second-screen devices may further function as stores of information, and also as sources of login requests and optionally credentials.

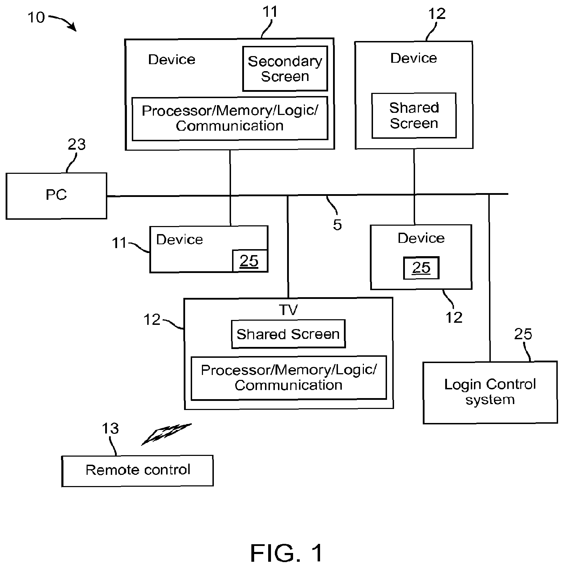

An example embodiment of the present invention is described below. Fig. 1 shows a multi-user, multi-device system 10, according to an embodiment of the invention. The system 10 implements a method for managing logins and user profiles across a number of devices, such that multiple users can use each of multiple "shared-screen" devices 12, with a coherent, persistent login state between the devices 12.

In this embodiment, there are one or more devices 12 with large shared display screens designed for viewing by multiple users (e.g., communal devices such as televisions). The large display screen devices 12 comprise general-purpose processors, memory, the ability to host applications and a communication mechanism (e.g., a network connection such as Ethernet, or Wi-Fi, Bluetooth, USB, or any other one-to-one or many-to-many communication mechanism).

Further, the system 10 may optionally include one or more personal second-screen devices 11 through which users log in and out of the various shared-screen devices 12 (among other operations). These second-screen devices 11 share a communication mechanism (such as a wired or wireless network connection 5) that is compatible with the devices 12, as well as having the ability to host applications. Examples of devices 11 include mobile electronic devices such as mobile phone devices, personal digital assistant devices, etc. The system 10 may further include computing devices such as a PC 23.

In one embodiment, the system 10 further includes a login control system (login system or login controller) 25 implementing functions for multi-user, multi-device login, according to the invention. The login control system 25 may be implemented in a stand alone device (as shown), or one or more of the devices 11, 12 may each include a login system 25 therein, or functionality of the login control system 25 may be implemented by the devices 11, 12 collectively. As such, implementation of the multi-user, multi-device login function is not limited to the examples shown.

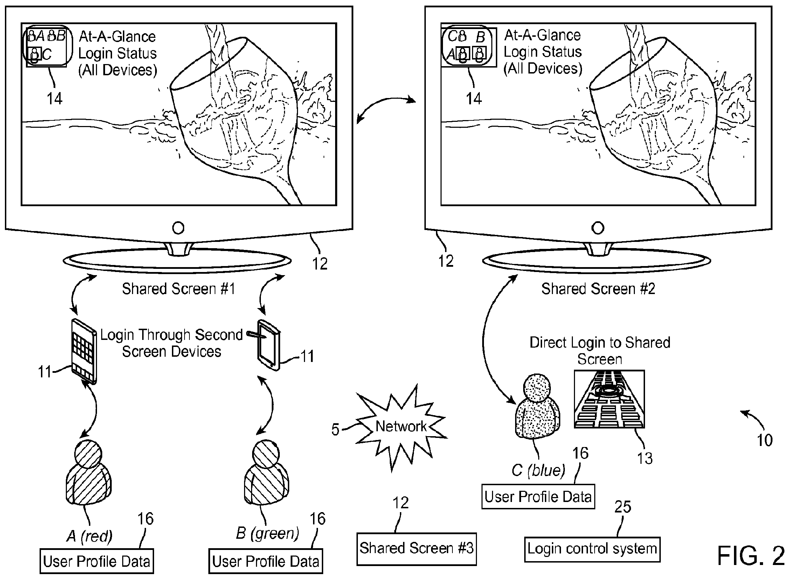

Fig. 2 illustrates an implementation of the system 10 including the login control system 25, wherein in one example scenario three users interact with the multi-user, multi-device login system 10, using two different shared-screen devices 12 (e.g., televisions Shared-screen #1 device and Shared-screen #2 device), and different login mechanisms. The leftmost user A is utilizing a second-screen device 11 (e.g., mobile electronic device) to log on to the system 10. Specifically, using the second-screen device 11, the user A has logged on to Shared-screen #1 device 12. User B is utilizing a different second-screen device 11 (e.g., an electronic tablet-style device) to also log on to the system 10. Specifically, user B also chose to log on to Shared-screen #1 device 12.

A third user C has elected to log on directly to Shared-screen #2 device 12 without using a second-screen device 11, but simply using a remote control for Shared-screen #2 device 12 to log on to the system 10 (and to the Shared-screen #2 device 12). As such, in this example, there are three users logged on to the system 10. The users A and B are concurrently logged on to Shared-screen #1 device 12, and the user C is logged in to Shared-screen #2 device 12.

Users A and B are able to access information based on user profiles of both users A and B on the Shared-screen #1 device 12, while user C has a more typical experience with Shared-screen #2 device 12 with only a single active profile for user C. In addition, each user can monitor a second-screen device 11 or their shared-screen device 12 (e.g., using graphical user interface 14) to determine which users are logged on to the system 10 as a whole, and which device each user is logged on to. Each user interfaces 14 shown provides an example presentation of information. According to embodiments of the invention any suitable heads-up display (or no display at all) can be integrated with the login and profile mechanism.

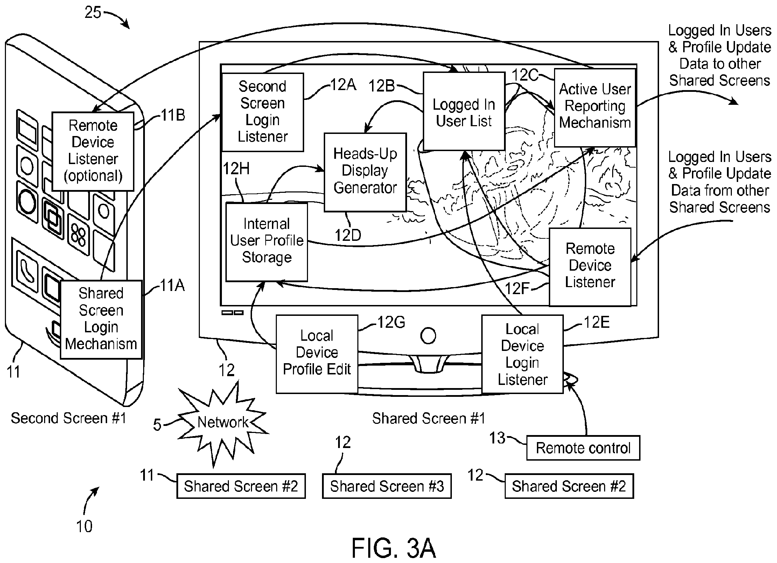

Fig. 3A illustrates details of an embodiment of the login control system 25 including modules in a second-screen device 11 (Second-screen #1) and a shared-screen device 12 (Shared-screen #1), in an implementation of the system 10 according to an embodiment of the invention. Fig. 3A also illustrates an operation process, as well as the communications between the devices 11 and 12 (e.g., using a wired and/or wireless network 5), according to an embodiment of the invention. The login system 25 comprises a shared-screen login module (mechanism) 11A, a remote device listener module 11B, a second-screen login listener module 12A, a logged in user list module 12B, an active user reporting module 12C, a heads-up display generator module 12D, a local device login listener module 12E, a remote device listener module 12F, a local device profile edit module 12G, and an internal user profile storage 12H, as described herein below.

When users log on to the system 10 via the second-screen device 11, a login command is sent from the shared-screen login module 11A in the Second-screen #1 device 11 to the second-screen login listener module 12A in Shared-screen #1 device 12.

The login listener module 12A receives the command and updates the logged in users list module 12B for the Second-screen #1 device 12. This information is sent to other shared-screen devices 12 (as well as other second-screen devices 11) through the active user reporting module 12C, and also rendered to the display screens of the Second-screen #1 device 11 and/or Shared-screen #1 device 12 using the heads-up display generator module 12D.

When a user logs on directly to the Shared-screen #1 device 12, such as through a wireless (Infrared) remote control 13 (Fig. 1), the local device login listener module 12E receives the login command, and updates the logged-in users list module 12B. As before, the active user reporting mechanism module 12C propagates this information to other devices (second-screen devices 11 and shared-screen devices 12).

A login location mechanism allows the system 10 as a whole to provide a single consensus view of which users are logged on to which devices in the system 10 based on the order in which user commands are received, and based on the devices in the system 10 to which the commands are sent.

The remote device listener module 12F listens for updates from the active user reporting module 12C on other shared-screen devices. The modules 12C and 12F keep a consistent state between all shared-screen devices. All changes made on one device are replicated to other devices. The active user reporting module 12C is also used to send similar updates to second-screen devices 11. The local device profile edit module 12G processes changes (made through a second-screen or remote control input) to a user profile data 16 (Fig. 2). The module 12G accepts the edits, processes them, and updates other modules (mainly the internal user profile storage 12H).

According to an embodiment of the invention, in the system 10 each user may be logged into one shared-screen device 12 and one second-screen device 11 at any given time. For example, if a user is logged on to Shared-screen #1 device 12 via a Second-screen #1 device 11, and then that user sends a login command to Shared-screen #2 device 12 from the same Second-screen #1 device 11, the user is logged out of Shared-screen #1 device 12 and logged into Shared-screen #2 device 12. If the user then utilizes a new second-screen device 11 (such as Second-screen #2 device), to log into Shared-screen #3 device 12, the user is logged out of the Second-screen #1 device 11, and also logged out of the Shared-screen #2 device 12, and logged into the new Second-screen #2 device 11 and the Shared-screen #3 device 12.

In one embodiment of the invention, each user of the multi-user, multi-device system 10 can have a full set of user-specific profile data 16 (Fig. 2) associated therewith. In one example, user-specific profile data 16 for the users is maintained in a memory device 12H in one or more shared-screen devices 12. In one implementation, the user profile data 16 for a user may include user statistics such as real name, age, and gender, but can also include additional information such as personal preferences for the operation of the shared-screen devices 12, preferences and other miscellaneous profile data associated with individual applications that are hosted on some or all of the shared-screen devices 12, etc.

When multiple users are active and logged on to the same shared-screen device 12, the users can interact with the information in user profile data 16 of each logged in user. In one embodiment, each user profile data 16 further includes "shared" profile information, which shared-screen devices 12 can generally access and display whenever a user is logged in. In one embodiment, each user profile data 16 further includes "private" profile information that can only be shared with the shared-screen device 12 a user is logged into, or displayed to users on any shared-screen device 12 by the explicit command of the user to whom the data is private.

In one embodiment, "Private" information is part of the profile data that is only available on the second-screen device unless explicit permission to share the information is given. This permission can, in certain embodiments, apply to only a single shared-screen device or apply to all shared-screen devices optionally based upon the type of permission granted by the user.

According to an embodiment of the invention, typically a second-screen device 11 is used to log on to the system 10. A two-tiered privacy mechanism is provided to allow the free sharing of innocuous data, as well as the controlled sharing of information that may be private or personal in nature to a user.

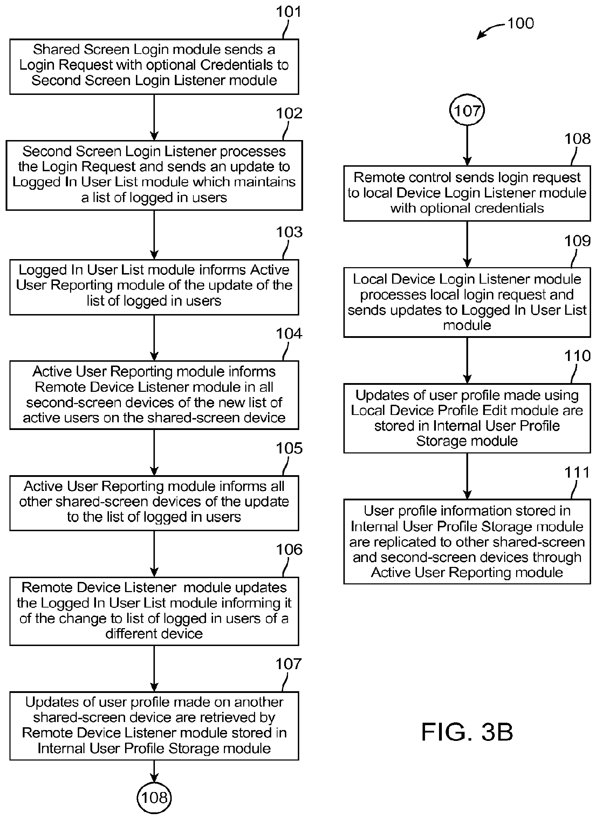

Fig. 3B illustrates a flowchart of an embodiment of a multi-user, multi-device login process 100 implemented by the login system of Fig. 3A, according to an embodiment of the invention. The login process 100 includes the following process blocks:
Block 101: The shared-screen login module 11A sends a login request with optional credentials to the second-screen login listener module 12A.
Block 102: The second-screen login listener module 12A processes the login request and sends an update to the logged in user list module 12B which maintains a list of logged in users.
Block 103: The logged in user list module 12B informs the active user reporting module 12C of the update of the list of logged in users.
Block 104: The active user reporting module 12C informs the remote device listener module 11 B in all second-screen devices of the new list of active users on the shared-screen device 12.
Block 105: The active user reporting module 12C informs all other shared-screen devices of the update to the list of logged in users. This information is received by the remote device listener module 12F of other second-screen devices.
Block 106: The remote device listener module 12F updates the logged in user list module 12B informing it of the change to the list of logged in users on a different device.
Block 107: Updates of user profile made on another shared-screen device are retrieved by the remote device listener module 12F and stored in the internal user profile storage module 12H.
Block 108: The remote control 13 sends a login request to the local device login listener module 12E with optional credentials.
Block 109: The local device login listener module 12E processes the local login request and sends updates to the logged in user list module 12B.
Block 110: Updates of user profile made using the local device profile edit module 12G are stored in the internal user profile storage module 12H.
Block 111: The user profile information stored by the internal user profile storage module 12H are replicated to other shared-screen and second-screen devices through the active user reporting module 12C.

The communications between the electronic devices in the examples illustrated in Figs. 3A-3B are via the communication system 5. In one embodiment of the communication, all the electronic devices may be on a single network, and in one example certain devices may use e.g., Ethernet and others use e.g., Wi-Fi, for communication.

In another embodiment of the communication, the electronic devices may be part of a mesh network where the only requirement is that each device is connected to the other devices using a communication mechanism. For example, there may be an Ethernet Network between a first set of devices D1, D2, and D3. There may also be a separate Ethernet network with devices D4, D5, and D6. They may also be a one-to-one Bluetooth connection between D2 and D4. A login system according to an embodiment of the invention operates on all devices D1-D6 making extra "hops" across the Bluetooth as needed.

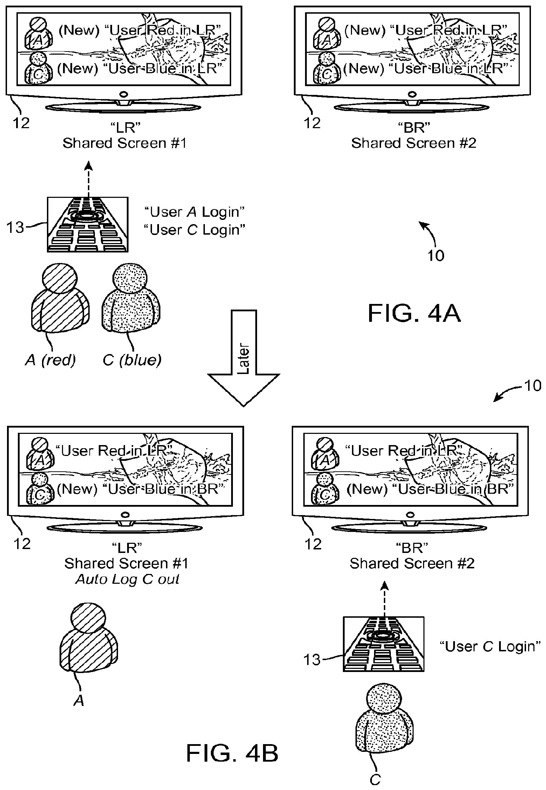

Figs. 4A-4B illustrate example use-cases according to embodiments of the invention wherein multiple users of shared-screen devices 12 such as digital televisions (DTVs) log in/out of the network system 10 using one or more conventional remote controls 13. The shared-screen devices 12 are shown as Shared-screen #1 device and Shared-screen #2 device, wherein in example Shared-screen #1 device in a living room (LR) location in a house and Shared-screen #2 device in a bedroom (BR) location in the house.

Specifically, Fig. 4A illustrates each of users A and C utilizing a remote control 13 to directly log into a shared-screen LR device 12. As a result, both shared-screen LR device 12 and shared-screen BR device 12 display the login status of the users A and C as new users logged into shared-screen LR device 12.

Fig. 4B illustrates that at a later time while user A remains logged into shared-screen LR device 12, user C is automatically logged out of shared-screen LR device 12 when user C utilizes a remote control 13 to directly log into the shared-screen BR device 12. As a result, both shared-screen LR device 12 and shared-screen BR device 12 display the login status of the user A as logged into shared-screen LR device 12, and user C as a new user logged into shared-screen LR device 12.

Users logging in using the remote control 13 send requests to the local device login listener module 12E (Fig. 3A). When the requests, and optionally required credentials, are processed, the logged in user list module 12B is updated. This triggers output on the screen through the heads-up display generator module 12D and propagation to other devices through module 12C, other devices, and the module remote device listener module 12F. The module 12F then updates the logged in user list 12B module of the other devices, which updates the display on these other shared-screen devices through heads-up display generator module 12D. Log outs performed on a remote control 13 follow a similar sequence of processes.

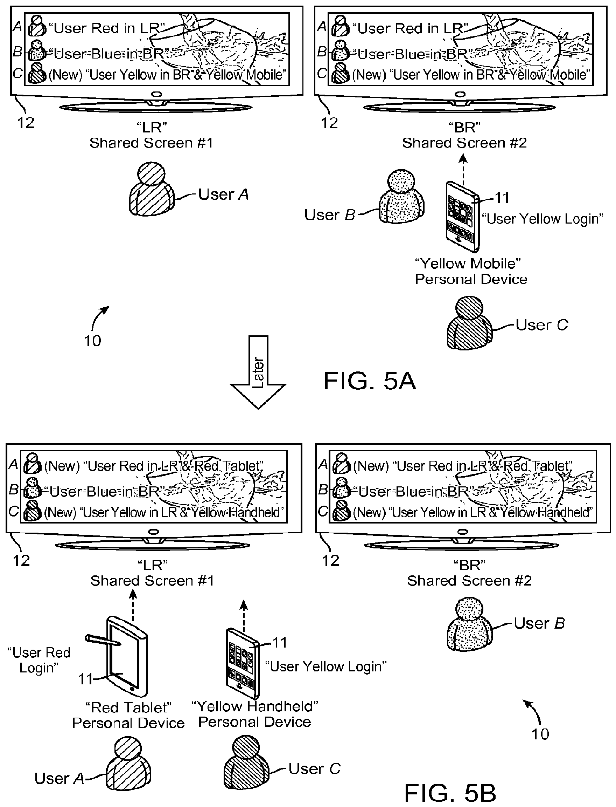

Figs. 5A-5B illustrate example use-cases according to embodiments of the invention wherein multiple users of a shared-screen device 12 such as a digital television (DTV) log in/out of the network system 10 using one or more personal second-screen devices 11. Specifically, Fig. 5A illustrates user A previously logged into shared-screen LR device 12 and user B previously logged into shared-screen BR device 12. Then user C logs into shared-screen BR device 12 using a personal second-screen device 11. As a result, both shared-screen LR device 12 and shared-screen BR device 12 display the login status of the users A and C as logged into shared-screen LR device 12 and shared-screen BR device 12, respectively. Further, both shared-screen LR device 12 and shared-screen BR device 12 show user C as new user logged into shared-screen BR device 12.

Fig. 5B illustrates that at a later time user A utilizes a personal second-screen device 11 to log into the shared-screen LR device 12 (causing automatic log out and then logging into the shared-screen LR device 12). Further, user C utilizes a personal second-screen device 11 to log into the shared-screen LR device 12 (causing automatic log out from shared-screen BR device 12). User B remains logged into shared-screen BR device 12. As a result, both shared-screen LR device 12 and shared-screen BR device 12 display the login status of the users A and C as new users logged into shared-screen LR device 12, while login status display of user B remains unchanged.

A user logs on using a personal second-screen device 11. The shared-screen login mechanism module 11A (Fig. 3A) sends login request(s), and optionally required credentials to, the second-screen login listener module 12A. The module 12A processes the response and updates the logged in user list module 12B. The update is propagated, causing the local screen (Shared-Screen #2 in Figs. 4A-4B and/or Figs. 5A-5B) to update through the heads-up display generator 12D, sending messages to one or more other shared-screens devices through the communication mechanism using the module 12C, other devices, modules 12F, 12B and 12D, as described above in relation to Figs. 4A-4B.

According to embodiments of the invention, in the examples operation scenarios illustrated in Figs. 4A-4B and Figs. 5A-5B:
Logging into a shared-screen device 12 (LR) may cause (not required) automatic log out from another shared-screen device 12 (BR) based on a condition such as "communal device sing leton-flag".
Logging into a personal second-screen device 11 causes log out from a shared-screen device 12.
Logging into a personal second-screen device 11 may cause (not required) log out from another personal second-screen device based 11 on a "personal device singleton-flag".

In one embodiment of the invention, a user may be logged on to only one of each "class" of devices at a time (e.g., one second-screen device and one shared-screen device). In another embodiment of the invention, a user may be logged onto multiple second-screen devices but only one shared-screen device (or in yet other embodiments, vice-versa).

In another embodiment of the invention, there may be a setting within the system (stored in the shared-screen devices and replicated between them using the cycle through modules 12G to 12C to 12F to 12G (Fig. 3A)), indicating that specific users may only be logged onto a single shared-screen device or a single second-screen device. This setting may be user specific or system specific. Such information may be stored, for example, in the same repository as the module 12G, either using the module 12G or using an additional module with identical placement to the module 12G.

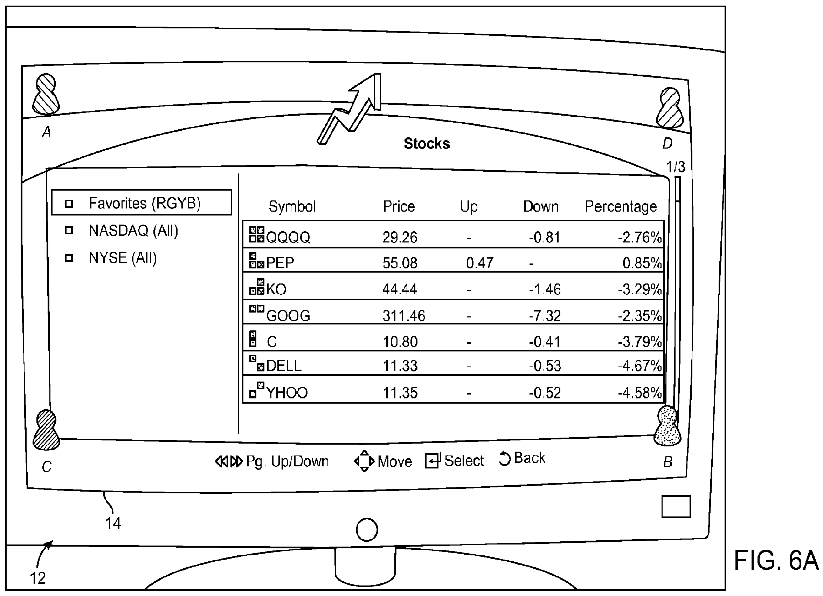

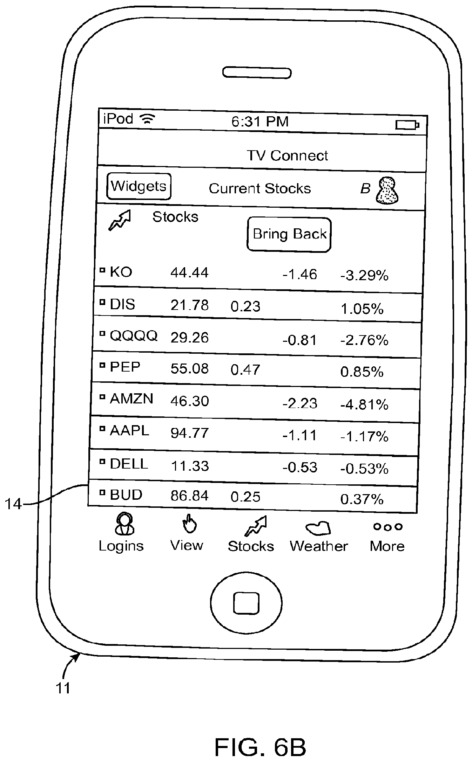

Figs. 6A-6B illustrate example user interface representations for use-cases in the system 10 wherein multiple users of shared-screen devices 12 and personal second-screen devices 11 log in/out of the network system 10, according to embodiments of the present invention. The interactions/presentations are presented differently among shared-screen devices 12 (e.g., television shown in Fig. 6A) and personal second-screen devices 11 (e.g., mobile electronic device shown in Fig. 6B). For example, Fig. 6A shows a user interface display 14 on a television device 12, illustrating icons representing multiple users A, B, C and D logged into television device 12, along with other video content (e.g., multi-user stock (personal stock, shared stocks, etc.)).

Fig. 6B shows a user interface display 14 on a mobile device 11, illustrating icons representing logged in user B, along with other video content, wherein user B is concurrently logged into the television device 12 and the mobile device 11. In this example, the television 12 displays video content comprising information on financial stocks from all users A, B, C and D, while mobile device 11 in use by user B displays video content comprising only personal stock information for user B.

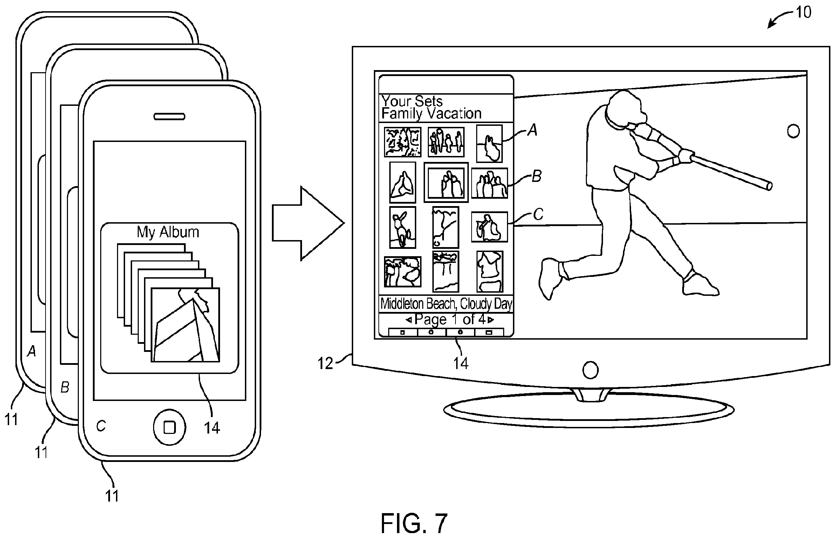

Fig. 7 illustrates a scenario according to an embodiment of the invention, wherein multiple users (e.g., Users A, B, C, ...) utilizing a photo sharing application when logged into the shared television device 12 in the network system 10, while concurrently each of the users is individually also logged into their own personal mobile device 11. All photo albums of all logged in users are displayed in a user interface 14 on television device 12, while a personal photo album of each user is displayed on the handheld device 11 (e.g., using media Share, personal photo, shared photos).

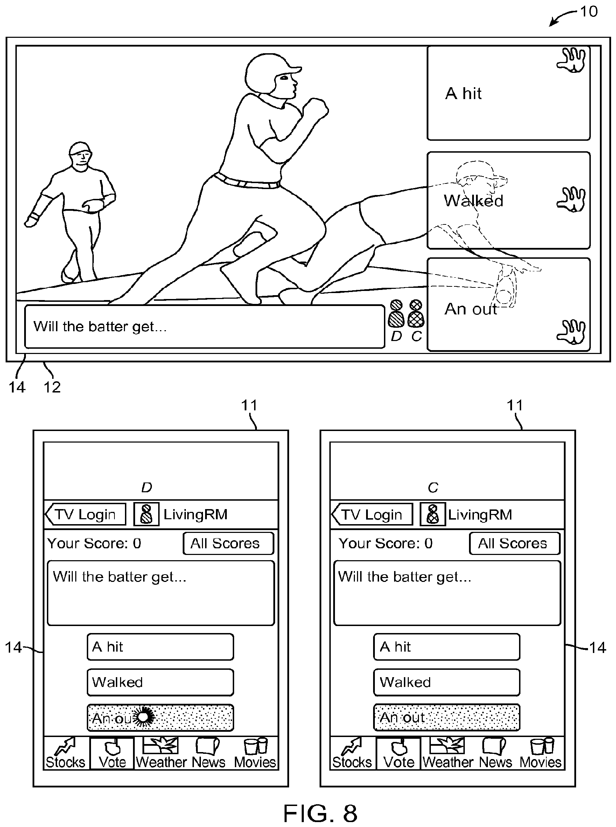

Fig. 8 illustrates a scenario according to an embodiment of the invention, wherein users C and D are logged into a shared-screen television device 12 displaying a user interface 14, and also logged into their own respective personal mobile second-screen devices 11, in a network system 10. When an interaction between the users occurs (e.g., vote on the outcome of a sports match on the display screen), the television device 12 displays and processes both user C and user D interactions together, while each personal mobile device 11 only displays and processes the interactions of its associated user individually.

Accordingly, embodiments of the invention provide a system-wide support mechanism for the active users and allow multiple devices that share a communication mechanism to use the same pool of user profiles. The system-wide support mechanism manages user logins between the multiple devices (as opposed to merely supporting login to a single device). Support for login through other mechanisms such as a second-screen device is also provided. Users may share the same display, and may interact. Users may also view the login-state of other users.

In another embodiment of the invention, there may be multiple types of communal or shared devices (e.g., a television and a jukebox-like device). In such an embodiment, each user may be logged into one instance of each type of shared device, rather than merely to one personal second-screen device and a single shared-screen device. A "shared-screen" need not be only a device whose primary function is as a visual display. A multi-user jukebox device connected to the multi-user, multi-device system 10, according to an embodiment of the invention, may serve as a "shared-screen" device even if it has no standard monitor-type display.

According to embodiments of the present invention, the terms "mechanism" and "module" as used herein include architectures such as program instructions for execution by a processor, as software modules, microcode, as hardware modules, as computer program product on computer readable media, as logic circuits, as application specific integrated circuits, as firmware, etc. Further, embodiments of each mechanism or module can take the form of an entirely hardware embodiment, an entirely software embodiment or an embodiment containing both hardware and software elements.

Embodiments of the present invention provide a system implementing a process that allows multiple users to share the same user profile information between multiple electronic devices sharing a communication mechanism (e.g., a network), and for users of each device to determine at-a-glance the login status of users on other devices. In addition, the support of multiple different devices, and multiple login mechanisms (including the "second-screen" devices) enables users to interact more freely with the devices in the network. Communication of login information between the different devices in the system allows a login control system/module in the multi-device system to keep track of, and display on multiple display screens, information about which devices various users are using, and take appropriate action including, for example, logging a user out of one "shared-screen" device when the users log in to a different "shared-screen" device in the system. The login control system/module further manages login state between devices in the system without the need for an authentication server or "domain controller" such as in complex business systems.

As is known to those skilled in the art, the aforementioned example architectures described above, according to the present invention, can be implemented in many ways, such as program instructions for execution by a processor, as software modules, microcode, as computer program product on computer readable media, as logic circuits, as application specific integrated circuits, as firmware, as consumer electronic devices, etc., in wireless devices, in wireless transmitters/receivers, in wireless networks, etc. Further, embodiments of the invention can take the form of an entirely hardware embodiment, an entirely software embodiment or an embodiment containing both hardware and software elements.

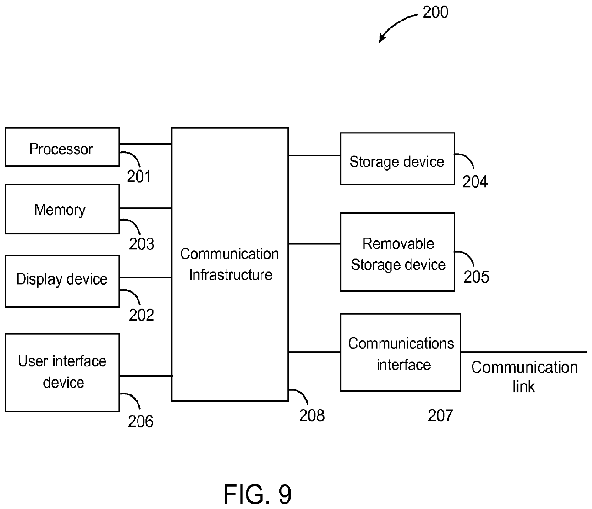

Fig. 9 is a high level block diagram showing an information processing system comprising a computer system 200 useful for implementing an embodiment of the present invention. The computer system 200 includes one or more processors 201, and can further include an electronic display device 202 (for displaying graphics, text, and other data), a main memory 203 (e.g., random access memory (RAM)), storage device 204 (e.g., hard disk drive), removable storage device 205 (e.g., removable storage drive, removable memory module, a magnetic tape drive, optical disk drive, computer readable medium having stored therein computer software and/or data), user interface device 206 (e.g., keyboard, touch screen, keypad, pointing device), and a communication interface 207 (e.g., modem, a network interface (such as an Ethernet card), a communications port, or a PCMCIA slot and card). The communication interface 207 allows software and data to be transferred between the computer system and external devices. The system 200 further includes a communications infrastructure 208 (e.g., a communications bus, cross-over bar, or network) to which the aforementioned devices/modules 201 through 207 are connected.

Information transferred via communications interface 207 may be in the form of signals such as electronic, electromagnetic, optical, or other signals capable of being received by communications interface 207, via a communication link that carries signals and may be implemented using wire or cable, fiber optics, a phone line, a cellular phone link, a radio frequency (RF) link, and/or other communication channels. Computer program instructions representing the block diagram and/or flowcharts herein may be loaded onto a computer, programmable data processing apparatus, or processing devices to cause a series of operations performed thereon to produce a computer implemented process.

Embodiments of the present invention have been described with reference to flowchart illustrations and/or block diagrams of methods, apparatus (systems) and computer program products according to embodiments of the invention. Each block of such illustrations/diagrams, or combinations thereof, can be implemented by computer program instructions. The computer program instructions when provided to a processor produce a machine, such that the instructions, which execute via the processor create means for implementing the functions/operations specified in the flowchart and/or block diagram. Each block in the flowchart/block diagrams may represent a hardware and/or software module or logic, implementing embodiments of the present invention. In alternative implementations, the functions noted in the blocks may occur out of the order noted in the figures, concurrently, etc.

The terms "computer program medium," "computer usable medium," "computer readable medium", and "computer program product," are used to generally refer to media such as main memory, secondary memory, removable storage drive, a hard disk installed in hard disk drive, and signals. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Computer program instructions may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

Furthermore, the computer readable medium may comprise computer readable information in a transitory state medium such as a network link and/or a network interface, including a wired network or a wireless network, that allow a computer to read such computer readable information. Computer programs (i.e., computer control logic) are stored in main memory and/or secondary memory. Computer programs may also be received via a communications interface. Such computer programs, when executed, enable the computer system to perform the features of the present invention as discussed herein. In particular, the computer programs, when executed, enable the processor multi-core processor to perform the features of the computer system. Such computer programs represent controllers of the computer system.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. A method of providing access to electronic devices, comprising:
in response to user login requests, controlling login access by providing multiple users login access to plural electronic devices capable of communicating via a communication system;
each electronic device comprising either a communal electronic device configured for concurrent use by multiple users and allowing multiple users to be logged on or logged off the electronic device concurrently, or a personal electronic device configured for use by an individual user; and
exchanging shared user profile information and user login status information among the plural electronic devices, the method **characterised by**:
the user profile including both shared and private profile information; controlling login access by accepting multiple users logins to said communal electronic device concurrently, and accepting at least one of the multiple users login into a respective one of the personal electronic devices;
displaying said shared user profile information of all the multiple users on the communal electronic device;
and
displaying said private user profile information of only the at least one of the multiple users only on the respective personal electronic device.

2. The method of claim 1, further comprising:
controlling login access wherein each user may be concurrently logged into a said personal electronic device and a said communal electronic device.

3. The method of claim 1, further comprising:
controlling login access by accepting a user login to a said communal device utilizing a said personal electronic device or by accepting a user login directly to a said communal electronic device.

4. The method of claim 1, wherein:
the communication system comprises a network interconnecting the electronic devices.

5. The method of claim 1, further comprising:
controlling login access by logging out a user from a said personal or communal electronic device upon accepting that user login into respectively another said personal or communal electronic device in the communication system.

6. A login system for providing access to electronic devices, comprising:
a login controller (25) configured for providing multiple users login access to plural electronic devices (11, 12) in response to login requests, wherein the electronic devices are capable of communicating via a communication system (5); and
the login controller further configured for each electronic device comprising either a communal electronic device (12) configured for concurrent use by multiple users and allowing multiple users to be logged on or logged off the electronic device concurrently, or a personal electronic device (11) configured for use by an individual user, and exchanging shared user profile information and user login status information among the plural electronic devices,
the system **characterised in that**:
the user profile includes both shared and private profile information; the login controller (25) is a configured to:
control login access by accepting multiple users logins to said communal electronic device concurrently, and to accept at least one of the multiple users login into a respective one of the personal electronic devices; display said shared user profile information of all the multiple users on the communal electronic device; and
display said private user profile information of only the at least one of the multiple users only on the respective personal electronic device.

7. The login system of claim 6, wherein:
the login controller (25) is further configured for controlling login access wherein each user may be concurrently logged into a said personal electronic device (11) and a said communal electronic device (12).

8. The login system of claim 6, wherein:
the login controller (25) is further configured for controlling login access by accepting a user login to a said communal device (11) utilizing a said personal electronic device (12) or by accepting a user login directly to a said communal electronic device (11).

9. The login system of claim 6, wherein:
the communication system (5) comprises a network interconnecting the electronic devices (11, 12).

10. The login system of claim 6, wherein:
the login controller (25) is further configured for controlling login access by logging out a user from a said personal (12) or communal (12) electronic device upon accepting that user login into respectively another said personal or communal electronic device in the communication system (5).

## Patentansprüche

1. Verfahren zum Bereitstellen von Zugang zu elektronischen Vorrichtungen, umfassend:
als Reaktion auf Benutzer-Einloganforderungen Steuern von Einlogzugang durch Bereitstellen von Einlogzugang für mehrere Benutzer zu mehreren elektronischen Vorrichtungen, die zum Kommunizieren über ein Kommunikationssystem fähig sind;
wobei jede elektronische Vorrichtung entweder eine gemeinsame elektronische Vorrichtung, die zur gleichzeitigen Verwendung durch mehrere Benutzer eingerichtet ist und mehreren Benutzern erlaubt, gleichzeitig auf der elektronischen Vorrichtung aus- oder eingelogged zu sein, oder eine persönliche elektronische Vorrichtung, die eingerichtet ist zur Verwendung durch einen einzelnen Benutzer; umfasst und
Austauschen geteilter Benutzerprofilinformationen und Benutzer-Einlogzustandsinformationen unter den mehreren elektronischen Vorrichtungen, wobei das Verfahren **gekennzeichnet ist dadurch**, dass:
das Benutzerprofil sowohl geteilte als auch private Profilinformationen enthält;
Steuern von Einlogzugang **durch** Annehmen der Einloggungen mehrerer Benutzer gleichzeitig in die gemeinsame elektronische Vorrichtung und Annehmen wenigstens eines Einloggens mehrerer Benutzer in eine jeweilige der persönlichen elektronischen Vorrichtungen;
Anzeigen der geteilten Benutzerprofilinformationen aller der mehreren Benutzer auf der gemeinsamen elektronischen Vorrichtung;
Anzeigen der privaten Benutzerprofilinformationen von nur dem wenigstens einen der mehreren Benutzer nur auf der jeweiligen persönlichen elektronischen Vorrichtung.

2. Verfahren nach Anspruch 1, weiterhin umfassend:
Steuern von Einlogzugang, wobei jeder Benutzer gleichzeitig in eine besagte persönliche elektronische Vorrichtung und eine besagte gemeinsame elektronische Vorrichtung eingeloggt werden kann.

3. Verfahren nach Anspruch 1, weiterhin umfassend:
Steuern von Einlogzugang durch Annehmen einer Benutzereinloggung in eine besagte gemeinsame Vorrichtung unter Verwendung einer besagten elektronischen Vorrichtung oder durch Annehmen eines Benutzereinloggens direkt in eine besagte gemeinsame elektronische Vorrichtung.

4. Verfahren nach Anspruch 1, wobei:
das Kommunikationssystem ein die elektronischen Vorrichtungen miteinander verbindendes Netz umfasst.

5. Verfahren nach Anspruch 1, weiterhin umfassend:
Steuern von Einlogzugang durch Ausloggen eines Benutzers aus einer besagten persönlichen oder gemeinsamen elektronischen Vorrichtung bei Annehmen dieses Benutzereinloggens in jeweils eine andere besagte persönliche oder gemeinsame elektronische Vorrichtung in dem Kommunikationssystem.

6. Einlogsystem zum Bereitstellen von Zugang zu elektronischen Vorrichtungen, umfassend:
eine Einlogsteuerung (25), die eingerichtet ist zum Bereitstellen von Einlogzugang für mehrere Benutzer zu mehreren elektronischen Vorrichtungen (11, 12) als Reaktion auf Einloganforderungen, wobei die elektronischen Vorrichtungen fähig sind, über ein Kommunikationssystem (5) zu kommunizieren; und
die Einlogsteuerung, die weiterhin eingerichtet ist für jede elektronische Vorrichtung umfassend entweder eine gemeinsame elektronische Vorrichtung (12), die eingerichtet ist zur gleichzeitigen Verwendung durch mehrere Benutzer und Zulassen, dass mehrere Benutzer gleichzeitig in der elektronischen Vorrichtung eingeloggt oder aus ihr ausgeloggt sind, oder eine persönliche elektronische Vorrichtung (11), die eingerichtet ist zur Verwendung durch einen einzelnen Benutzer, und Austauschen geteilter Benutzerprofilinformationen und Benutzer-Einlogzustandsinformationen unter den mehreren elektronischen Vorrichtungen, wobei das System **gekennzeichnet ist dadurch**, dass
das Benutzerprofil sowohl geteilte als auch private Profilinformationen enthält;
die Einlogsteuerung (25) eingerichtet ist zum:
Steuern von Einlogzugang **durch** Annehmen mehrerer Benutzereinloggungen gleichzeitig in die gemeinsame elektronische Vorrichtung und Annehmen des Einloggens wenigstens eines der mehreren Benutzer in eine jeweilige der persönlichen elektronischen Vorrichtungen;
Anzeigen der geteilten Benutzerprofilinformationen aller der mehreren Benutzer auf der gemeinsamen elektronischen Vorrichtung und
Anzeigen der privaten Benutzerprofilinformationen von nur dem wenigstens einen der mehreren Benutzer nur auf der jeweiligen persönlichen elektronischen Vorrichtung.

7. Einlogsystem nach Anspruch 6, wobei:
die Einlogsteuerung (25) weiterhin eingerichtet ist zum Steuern von Einlogzugang, wobei jeder Benutzer gleichzeitig in eine besagte persönliche elektronische Vorrichtung (11) und eine besagte gemeinsame elektronische Vorrichtung (12) eingeloggt sein kann.

8. Einlogsystem nach Anspruch 6, wobei:
die Einlogsteuerung (25) weiterhin eingerichtet ist zum Steuern von Einlogzugang durch Annehmen einer Benutzereinloggung in eine besagte gemeinsame Vorrichtung (11) unter Benutzung einer besagten persönlichen elektronischen Vorrichtung (12) oder durch Annehmen einer Benutzereinloggung direkt in eine besagte gemeinsame elektronische Vorrichtung (11).

9. Einlogsystem nach Anspruch 6, wobei:
das Kommunikationssystem (5) ein die elektronischen Vorrichtungen (11, 12) miteinander verbindendes Netz umfasst.

10. Einlogsystem nach Anspruch 6, wobei:
die Einlogsteuerung (25) weiterhin eingerichtet ist zum Steuern von Einlogzugang durch Ausloggen eines Benutzers aus einer besagten persönlichen (12) oder gemeinsamen (12) elektronischen Vorrichtung bei Annehmen dieser Benutzereinloggung in jeweils eine andere besagte persönliche oder gemeinsame elektronische Vorrichtung in dem Kommunikationssystem (5).

## Revendications

1. Procédé de fourniture d'accès à des dispositifs électroniques, comprenant :
en réponse à des demandes de connexion utilisateur, le contrôle d'un accès de connexion par fourniture d'accès de multiples connexions utilisateurs à une pluralité de dispositifs électroniques capables de communiquer via un système de communication ;
chaque dispositif électronique comprenant soit un dispositif électronique communautaire configuré pour une utilisation simultanée par de multiples utilisateurs et permettant la connexion ou la déconnexion de multiples utilisateurs simultanément par rapport au dispositif électronique, soit un dispositif électronique personnel configuré pour une utilisation par un utilisateur individuel ; et
l'échange d'informations de profil utilisateur partagées et d'informations d'état de connexion utilisateur entre la pluralité de dispositifs électroniques,
le procédé étant **caractérisé par :**
**le fait que** le profil utilisateur inclut tant des informations de profil partagées que des informations de profil privées ;
le contrôle d'un accès de connexion par acceptation de multiples connexions utilisateurs simultanées audit dispositif électronique communautaire, et acceptation d'au moins l'une des multiples connexions utilisateurs à l'un respectif des dispositifs électroniques personnels ;
l'affichage desdites informations de profil utilisateur partagées de tous les multiples utilisateurs sur le dispositif électronique communautaire ; et
l'affichage desdites informations de profil utilisateur privées de seulement l'au moins un des multiples utilisateurs, uniquement sur le dispositif électronique personnel respectif.

2. Procédé selon la revendication 1, comprenant en outre :
le contrôle d'un accès de connexion où chaque utilisateur peut se connecter simultanément à un dit dispositif électronique personnel et à un dit dispositif électronique communautaire.

3. Procédé selon la revendication 1, comprenant en outre :
le contrôle d'un accès de connexion par acceptation d'une connexion utilisateur à un dit dispositif communautaire à l'aide d'un dit dispositif électronique personnel ou par acceptation d'une connexion utilisateur directement à un dit dispositif électronique communautaire.

4. Procédé selon la revendication 1, dans lequel :
le système de communication comprend un réseau connectant les dispositifs électroniques entre eux.

5. Procédé selon la revendication 1, comprenant en outre :
le contrôle d'un accès de connexion par déconnexion d'un utilisateur d'un dit dispositif électronique personnel ou communautaire lors de l'acceptation de la connexion de cet utilisateur à un autre dit dispositif électronique respectivement personnel ou communautaire dans le système de communication.

6. Système de connexion pour la fourniture d'un accès à des dispositif électroniques, comprenant :
un contrôleur de connexion (25) configuré pour fournir de multiples accès de connexions utilisateurs à une pluralité de dispositifs électroniques (11, 12) en réponse à des demandes de connexion, les dispositifs électroniques étant capables de communiquer via un système de communication (5) ; et
le contrôleur de connexion est en outre configuré pour chaque dispositif électronique comprenant soit un dispositif électronique communautaire (12) configuré pour une utilisation simultanée par de multiples utilisateurs et permettant la connexion ou la déconnexion de multiples utilisateurs simultanément par rapport au dispositif électronique, soit un dispositif électronique personnel (11) configuré pour une utilisation par un utilisateur individuel ; et
l'échange d'informations de profil utilisateur partagées et d'informations d'état de connexion utilisateur entre la pluralité de dispositifs électroniques,
le système étant **caractérisé en ce que** :
le profil utilisateur inclut tant des informations de profil partagées que des informations de profil privées ;
le contrôleur de connexion (25) est configuré pour :
contrôler un accès de connexion par acceptation de multiples connexions utilisateurs simultanées audit dispositif électronique communautaire, et acceptation d'au moins l'une des multiples connexions utilisateurs à l'un respectif des dispositifs électroniques personnels ;
afficher lesdites informations de profil utilisateur partagées de tous les multiples utilisateurs sur le dispositif électronique communautaire ; et
afficher lesdites informations de profil utilisateur privées de seulement l'au moins un des multiples utilisateurs, uniquement sur le dispositif électronique personnel respectif.

7. Système de connexion de la revendication 6, dans lequel :
le contrôleur de connexion (25) est en outre configuré pour contrôler un accès de connexion où chaque utilisateur peut se connecter simultanément à un dit dispositif électronique personnel (11) et à un dit dispositif électronique communautaire (12).

8. Système de connexion de la revendication 6, dans lequel :
le contrôleur de connexion (25) est en outre configuré pour contrôler un accès de connexion par acceptation d'une connexion utilisateur à un dit dispositif communautaire (11) à l'aide d'un dit dispositif électronique personnel (12) ou par acceptation d'une connexion utilisateur directement à un dit dispositif électronique communautaire (11).

9. Système de connexion selon la revendication 6, dans lequel :
le système de communication (5) comprend un réseau connectant les dispositifs électroniques (11, 12) entre eux.

10. Système de connexion selon la revendication 6, dans lequel :
le contrôleur de connexion (25) est en outre configuré pour contrôler un accès de connexion par déconnexion d'un utilisateur d'un dit dispositif électronique personnel (12) ou communautaire (12) lors de l'acceptation de la connexion de cet utilisateur à un autre dit dispositif électronique respectivement personnel ou communautaire dans le système de communication (5).
